# EUROPÄISCHE PATENTSCHRIFT

(11) **EP 1 331 084 B1**
(45) Veröffentlichungstag und Bekanntmachung des Hinweises auf die Patenterteilung: **10.03.2004**
(21) Anmeldenummer: 02001768.7
(22) Anmeldetag: 25.01.2002
(51) Int. Cl.: B29C 59/02

(54) **Verfahren zum Abformen von Mikro- und Nanostrukturen**
Process for shaping micro and nano structures
Procédé pour mouler des micro- et nanostructures

(43) Veröffentlichungstag der Anmeldung: 30.07.2003
(73) Patentinhaber: Leister Process Technologies, 6060 Sarnen (CH); Fachhochschule Aargau, 5210 Windisch (CH)
(72) Erfinder: Simoneta, David, 6600 Locarno (CH); D'Amore, Alessandro, 5610 Wohlen (CH)
(74) Vertreter: Klocke, Peter, Dipl.-Ing.

(56) Entgegenhaltungen:
- EP-A- 1 068 945
- US-A- 4 761 253
- US-A- 5 078 947
- US-B1- 6 195 214
- PATENT ABSTRACTS OF JAPAN vol. 2000, no. 23, 10. Februar 2001 (2001-02-10) & JP 2001 158044 A (KUROSAKI YASUO), 12. Juni 2001 (2001-06-12)

## Beschreibung

Die Erfindung betrifft ein Verfahren zum Abformen von Mikro- und Nanostrukturen auf einer durch Wärme strukturierbaren Schicht mittels einer strukturierten Abformvorlage unter Verwendung elektromagnetischer Strahlung zur Erzeugung der erforderlichen Wärme, wie beispielsweise aus JP-A-2001 158044 oder US-A-5,078,947 bekannt.

Die genaue Abformung von Mikro- und Nanostrukturen wird heute mit Verfahren erreicht, die relativ hohe Zykluszeiten aufweisen (Heißprägen) oder die mit Ausgangsmaterialien arbeiten, die die Prozesssteuerung von wichtigen Parametern erschweren können (z.B. Polymerisation und Temperatur beim UVcasting). Bei schnelleren Verfahren wie das Spritzgießen ist die Abformung kleinerer Strukturen in bestimmten Fällen (z.B. Strukturen mit hohem Aspektverhältnis) nicht optimal oder nur mit einer kosten- und zeitintensiven dynamischen Temperierung des Werkzeugs möglich.

In vielen Anwendungen der Mikro- und Nanotechnik sind Verfahren gefragt, die gleichzeitig schnelle Zykluszeiten, präzise Abformungen und eine lokale Kontrolle der Wärmezufuhr der zu erwärmenden oder zu strukturierenden Stelle erlauben. Das ist z.B. der Fall, wenn unterschiedliche Substrate durch Zufuhr von Wärme strukturiert und zusammen verbunden werden sollen, ohne dabei die eigene Funktionalität gegenseitig zu beeinträchtigen (mikrostrukturierte Komponenten mit funktionalisierten Oberflächen, Mikrokanälen mit biologisch oder chemisch aktiven Substraten sowie diffraktiven Oberflächen, usw.). Schnelligkeit und Abformqualität sind auch die Vorteile nanolithographischer Prägeverfahren gegenüber seriellen Verfahren wie die direkte Elektronenstrahllithographie. Bei nanolithograghischen Prägeverfahren ist eine präzise Kontrolle der Dicke der Restschicht und eine schnelle Vervielfachung der strukturierten Vorlage an verschiedenen Orten eines beschichteten Substrats von Vorteil.

Der vorliegenden Erfindung liegt daher die Aufgabe zugrunde, eine Möglichkeit vorzuschlagen, mit der eine schnelle und genaue Abformung von Mikro- und Nanostrukturen, insbesondere mit kurzen Prozesszeiten und lokaler Kontrolle der Wärmezufuhr möglich ist.

Diese Aufgabe wird erfindungsgemäß durch ein Verfahren mit den Merkmalen des Hauptanspruchs gelöst. Weitere vorteilhafte Ausgestaltungen sind den Unteransprüchen zu entnehmen.

Gemäß dem Verfahren wird eine mechanisch stabile Abformvorlage und ein stabiler Schichtträger verwendet. Die Abformvorlage oder der Schichtträger werden durch Absorption eines Strahles hoher Energiedichte nur an der Oberfläche auf Grund einer geringen Eindringtiefe des Stahls erwärmt, so dass die erzeugte Wärme auf die Schicht übertragen wird. Anschließend wird die erweichte Schicht mittels der Abformvorlage strukturiert, wobei eine Schicht verwendet wird, die für den Strahl möglichst weitgehend transmittierend ist und von dem Strahl vor der Absorption in der Abformvorlage durchdrungen wird. Bei dem Verfahren findet somit ausschließlich eine indirekte Erwärmung der strukturierbaren Schicht statt. Dies geschieht entweder durch die Erwärmung des Schichtträgers oder durch das Eindringen einer erwärmten Abformvorlage. Die Energiedichte des Strahles, die z.B. mit einem Hochleistungs-Diodenlaser im IR-Bereich erreichbar ist, muss so hoch und die Eindringtiefe der Oberfläche so klein sein, dass das Substrat am schnellsten die Temperatur und Temperaturverteilung erreicht, die für die Abformung der gewünschten Strukturen nötig ist. Dieser Prozess wird je nach Abformvorlage durch eine kontinuierliche oder pulsierende Führung des Strahles unterstützt. Dabei ist es möglich durch eine geeignete Optik einen feinen punkt- oder linienförmigen Laserstrahl über die zu erwärmende Oberfläche zu bewegen.

Wichtig ist dabei, dass die Erwärmung so kurz ist, dass eine wesentliche Wärmeableitung, die von der Wärmeleitfähigkeit des Substrats abhängig ist, und unerwünschte Wärmeverteilung vermieden wird. Demzufolge muss die Energiezufuhr und die davon abhängige Erwärmung in Abhängigkeit von der Wärmeleitfähigkeit gewählt werden. Zur Einrichtung der Prozessparameter müssen daher zuerst die Wärmeleitfähigkeit ermittelt und dann die entsprechend geeignete Prozessdauer und zugeführte Energie ermittelt werden, um die gewünschten Ergebnisse zu erhalten.

Das Verfahren erlaubt sehr kurze Zykluszeiten und gleichzeitig eine sehr gute Abformungsqualität, wobei die sehr kleine thermische Trägheit des gesamten Systems und die lokale und konzentrierte dynamische Erwärmung dies ermöglicht.

Die Schicht, die aus einem für die Strahlung genügend transmittierenden Material, beispielsweise Polykarbonat oder PMMA besteht, kann durch dieselbe Strahlenquelle unmittelbar nach der Abformung der Strukturen auch mit einer absorbierenden Schicht verbunden werden, wie z.B. beim Laserschweißen, so dass auf derselben Vorrichtung Abformung und Montage stattfinden können.

Im vorliegenden Fall wird unter Abformung nicht ausschließlich Prägen verstanden. Durch Bestrahlung von halbleitenden Materialien, beispielsweise Silizium, die eine sehr kleine Eindringtiefe für die Strahlung besitzen, können an der bestrahlten Oberfläche außer Wärme auch Ladungsträger erzeugt werden, die in einer Schmelze elektrohydrodynamische Effekte induzieren und dabei die Abformung unterstützen können.

Durch einfache Steuerung/Regelung der Strahlungsquelle kann die Wärmezufuhr bestimmt werden, die für das Material, die Art der abzuformenden Strukturen und die Art der Verbindungen optimal ist. Die kontinuierliche oder pulsierende Führung des Strahls durch eine Maske oder geeignete Optik stützt dabei die Abgrenzung der erwärmten Oberfläche.

In der Materialtechnik, insbesondere Beschichtungstechnik und in der Pulvertechnologie, werden heute noch transmittierende und absorbierende Materialien entwickelt, die für das Verfahren eingesetzt werden können. Auch ist es möglich, abgekrümmte Schichtträger und Abformvorlagen vorzusehen.

Nachfolgend wird die Erfindung an Hand von Ausführungsbeispielen in Verbindung mit den begleitenden Zeichnungen näher erläutert. Es stellen dar:
- Figur 1: das Abformen von Mikro- und Nanostrukturen auf einem Substrat;
- Figur 2: das nanolithographische Abformen auf strahldurchlässige Schichtträgem und
- Figur 3: das nanolithographische Abformen auf strahlabsorbierenden Schichtträgern.

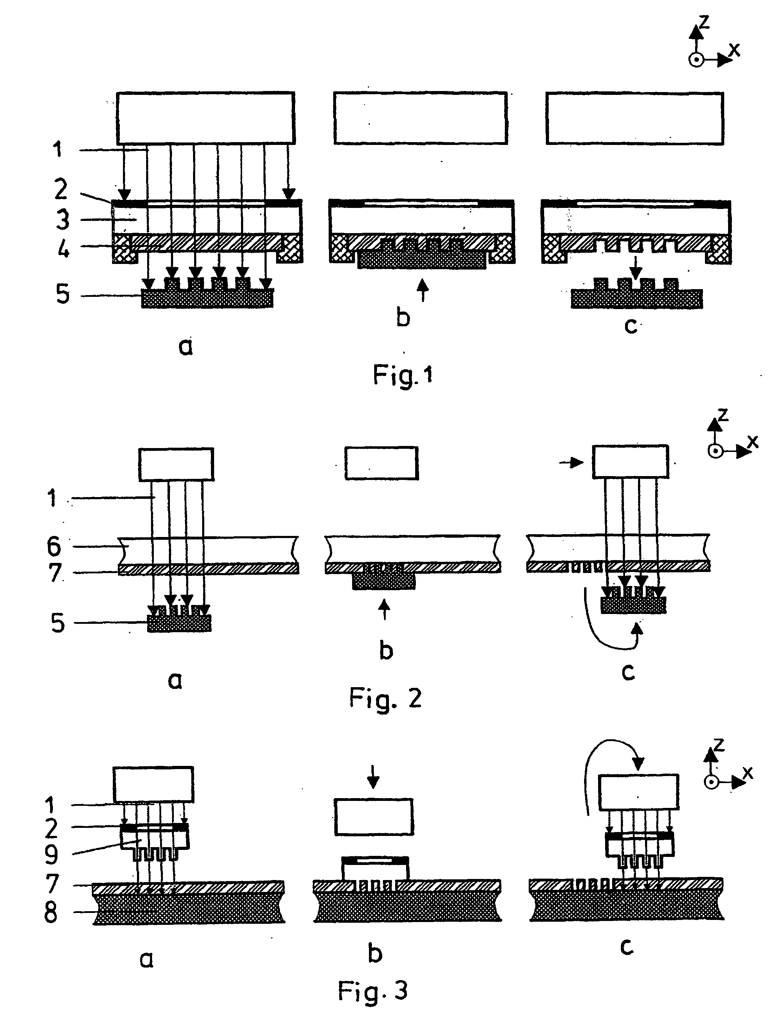

Gemäß Figur 1a wird ein Wärmestrahl 1 durch eine strahldurchlässige Platte 3, beispielsweise aus Quarzglas, und einen gegen diese Platte gepressten strahldurchlässiges Substrat 4 geführt. Durch eine Maske 2 oder durch eine geeignete Optik können die Dimensionen des Energiestrahls an die darunter befindliche Prägevorlage 5 als Abformvorlage angepasst werden. Die Prägevorlage 5, beispielsweise aus Silizium oder Nickelphosphor, wird durch die Absorption des Wärmestrahls an der Oberfläche auf Grund der geringen Eindringtiefe sehr schnell aufgeheizt. Mikro- oder Nanostrukturen auf der Prägevorlage 5 können dann auf das Substrat 4 abgeformt werden (Figur 1b). Nach der nötigen Abkühlzeit wird das abgeformte Substrat 4 von der Prägevorlage 5 entfernt (Figur 1 c). Seriell zum Abformvorgang können durch die direkte Absorption des Wärmestrahls Merkmale auf dem Substrat 4 zugeschweißt werden. Das Substrat 4 stellt bei diesem Verfahren sowohl den Schichtträger als auch die strukturierbare Schicht dar.

Bei dem Ausführungsbeispiel gemäß Figur 2 wird gezeigt, dass auch die Generierung von nanostrukturierten Resistmasken durch lithographisches Abformen gemäß dem Verfahren möglich ist. Hier wird eine strahldurchlässige Platte 6 mit einem geeigneten Material, beispielsweise PMMA oder Polykarbonat beschichtet. Der Energiestrahl 1 durchdringt die Platte 6 als auch die Schicht 7 und heizt die darunter stehende nanostrukturierte Oberfläche der Prägevorlage 5 auf (Figur 2a). Danach können in die Schicht 7 Strukturen abgeformt werden (Figuren 1b und 1c). Durch Verschieben der Strahlungsquelle für den Energiestrahl 1 und die Prägevorlage 5 gegenüber der Platte 6 und der Schicht 7 können Abformungen an verschiedenen Stellen wiederholt werden und damit Strukturen im Nanometerbereich auf größeren Oberflächen vervielfältigt werden.

Figur 3 zeigt eine Möglichkeit zur Erzeugung einer Resistmaske für eine strahlabsorbierende Platte 8. Hierzu wird diese Platte 8 zuerst mit einem geeigneten Material 7 beschichtet (Figur 3a). Die strukturierte Prägevorlage 9 ist in diesem Fall strahldurchlässig und kann auf der oberen Seite eine Maske 2 aufweisen. Durch diese Maske kann eine gezielte Führung des Strahls und somit eine örtlich definierte Aufheizung der strahlabsorbierenden Platte 8 erreicht werden. Ergebnis davon ist, dass die Oberfläche der Schicht 7 unabhängig von der Dimension der Prägevorlage 9 lokal aufgeschmolzen werden kann. Das ist sehr vorteilhaft, um Strukturen nebeneinander abzuformen und so die Strukturen im Nanometerbereich auf größeren Oberflächen vermehren zu können. Es erfolgt ähnlich wie in Figur 2 durch Verschieben in x-, y- und z-Richtung des Energiestrahls 1, der Maske 2 und der Prägevorlage 9 gegenüber der Schicht 7 und der Platte 8 (Figuren 3b und 3c). Der Abstand zwischen den einzelnen Abformungen kann in dieser Variante sehr klein sein. Als Energiequelle für die Erzeugung der hohen Energiedichte kann beispielsweise ein Hochleistungs-Diodenlaser verwendet werden, der im IR-Bereich emittiert.

In beiden Varianten des nanolithographischen Abformens (Figuren 2 und 3) erlaubt die kleine thermische Trägheit des Systems eine effektive Kontrolle der Restschicht schon nur durch eine gezielte Führung des Energiestrahls. Die abgeformte Resistmaske kann als Vorlage für die Nanostrukturierung des Substrats durch Ätzung oder Galvanoformung benutzt werden.

## Patentansprüche

1. Verfahren zum Abformen von Mikro- und Nanostrukturen auf einer durch Wärme strukturierbaren Schicht mittels einer strukturierten Abformvorlage (5, 9) unter Verwendung elektromagnetischer Strahlung zur Erzeugung der erforderlichen Wärme, wobei eine mechanisch stabile Abformvorlage (5, 9) und ein stabiler Schichtträger (4, 6, 8) verwendet, die Abformvorlage oder der Schichtträger durch Absorption eines Strahls (1) hohe Energiedichte an der Oberfläche auf Grund einer geringen Eindringtiefe des Strahls erwärmt, die erzeugte Wärme auf die Schicht (4, 7) übertragen und anschließend die erweichte Schicht mittels der Abformvorlage strukturiert wird, wobei eine Schicht verwendet wird, die für den Strahl möglichst weitgehend transmittierend ist und von dem Strahl vor der Erwärmung durchdrungen wird.

2. Verfahren nach Anspruch 1, **dadurch gekennzeichnet**, das die Abformvorlage (5, 9) oder der Schichtträger (4, 6, 8) aus Silizium oder Nickelphosphor hergestellt wird.

3. Verfahren nach einem der vorangegangenen Ansprüche, **dadurch gekennzeichnet, dass** die bestrahlte Oberfläche durch eine Maske (2) begrenzt wird.

4. Verfahren nach einem der vorangegangenen Ansprüche, **dadurch gekennzeichnet, dass** eine strukturierte Abformvorlage (5, 9) in die Nähe der Schicht (4, 7) gebracht wird, diese berührt oder gegen die Schicht gepresst wird, wobei zuvor entweder die Abformvorlage oder die Schichtträger erwärmt wird.

5. Verfahren nach einem der vorangegangenen Ansprüche, **dadurch gekennzeichnet, dass** die Strahlung zusätzlich von der Abformvorlage (9) oder dem Schichtträger (4, 6) transmittiert und entsprechend von dem Schichtträger (8) bzw. der Abformvorlage (5) absorbiert wird.

6. Verfahren nach einem der vorangegangenen Ansprüche, **dadurch gekennzeichnet, dass** ein linienförmiger Energiestrahl mindestens einmal über die Abformvorlage bewegt wird.

7. Verfahren nach einem der vorangegangenen Ansprüche, **dadurch gekennzeichnet, dass** die bestrahlte Oberfläche durch eine geeignete Optik flächenmäßig bestrahlt wird.

## Claims

1. Method of shaping micro- and nanostructures on a layer, which is structurable by heat, by means of a structured moulding pattern (5, 9), using electromagnetic radiation to generate the required heat, wherein a mechanically stable moulding pattern (5, 9) and a stable layer carrier (4, 6, 8) are used, the moulding pattern or the layer carrier heats a high energy density on the surface by absorption of a ray (1), because the ray has a small depth of penetration, the generated heat is transmitted to the layer (4, 7), and subsequently the softened layer is structured by means of the moulding pattern, a layer being used which is as largely transmitting as possible for the ray and is penetrated by the ray prior to the heating process.

2. Method according to claim 1, **characterised in that** the moulding pattern (5, 9) or the layer carrier (4, 6, 8) is produced from silicon or nickel phosphorus.

3. Method according to one of the preceding claims, **characterised in that** the irradiated surface is defined by a mask (2).

4. Method according to one of the preceding claims, **characterised in that** a structured moulding pattern (5, 9) is brought into the vicinity of the layer (4, 7), is in contact therewith or is pressed against the layer, either the moulding pattern or the layer carriers being previously heated.

5. Method according to one of the preceding claims, **characterised in that** the radiation is transmitted additionally by the moulding pattern (9) or the layer carrier (4, 6) and is accordingly absorbed by the layer carrier (8) or the moulding pattern (5) respectively.

6. Method according to one of the preceding claims, **characterised in that** a linear beam of energy is moved at least once over the moulding pattern.

7. Method according to one of the preceding claims, **characterised in that** the irradiated surface is irradiated over the area by a suitable optical system.

## Revendications

1. Procédé pour mouler des micro- et nanostructures sur une couche structurable par la chaleur au moyen d'un gabarit de moulage structuré (5, 9) en utilisant un rayonnement électromagnétique pour générer la chaleur nécessaire, dans lequel on utilise un gabarit de moulage (5, 9) mécaniquement stable et un support de couche (4 , 6, 8) stable, le gabarit de moulage ou le support de couche étant chauffé par absorption d'un rayon (1) de haute densité d'énergie à la surface en raison de la faible profondeur de pénétration du rayon, la chaleur générée étant transmise à la couche (4, 7) et la couche ramollie étant ensuite structurée au moyen du gabarit de moulage, procédé dans lequel on utilise une couche qui transmet le plus largement possible le rayon et qui est traversée par le rayon avant l'échauffement.

2. Procédé selon la revendication 1, **caractérisé par le fait que** le gabarit de moulage (5, 9) ou le support de couche (4, 6, 8) est réalisé en silicium ou en phosphure de nickel.

3. Procédé selon l'une des revendications précédentes, **caractérisé par le fait que** la surface irradiée est limitée par un masque (2).

4. Procédé selon l'une des revendications précédentes, **caractérisé par le fait que** l'on place un gabarit de moulage structuré (5, 9) à proximité de la couche (4, 7), qu'on le mette en contact ou qu'on le presse contre cette dernière, le gabarit de moulage ou le support de couche étant préalablement chauffé.

5. Procédé selon l'une des revendications précédentes, **caractérisé par le fait que** le rayonnement est transmis en plus par le gabarit de moulage (9) ou le support de couche (4, 6) et absorbé en conséquence par le support de couche (8) ou le gabarit de moulage (5).

6. Procédé selon l'une des revendications précédentes, **caractérisé par le fait que** l'on déplace au moins une fois un rayon d'énergie linéaire sur le gabarit de moulage.

7. Procédé selon l'une des revendications précédentes, **caractérisé par le fait que** la surface irradiée est irradiée de manière surfacique par une optique appropriée:
